# EUROPEAN PATENT APPLICATION

(11) **EP 1 544 711 A2**
(43) Date of publication of application: **22.06.2005**
(21) Application number: 04029856.4
(22) Date of filing: 16.12.2004
(51) Int. Cl.: G06F 1/00

(54) **Method for protecting confidentiality of communications between electronic devices**

(30) Priority: 19.12.2003 IT mi20032545
(71) Applicant: Cristofani; Giuseppe, 47014 Meldola (Prov. of Forli-Cesena) (IT)
(72) Inventor: Cristofani; Giuseppe, 47014 Meldola (Prov. of Forli-Cesena) (IT)
(74) Representative: Modiano, Guido, Dr.-Ing.

(57) **Abstract**

A method for protecting confidentiality of communications made over electronic devices comprising the steps of:
defining, for at least one user of a terminal device, a private user profile that can be accessed exclusively by said user;
recognizing an incoming or outgoing communication identifier and verifying its association with a private user profile;

if an association exists, filtering the incoming or outgoing communication so as to make it invisible to other users that are different from the user with whose private profile the incoming or outgoing communication is associated.

## Description

The present invention relates to a method for protecting confidentiality of communications made over electronic devices. More particularly, the invention relates to a method that allows to protect voice and/or data communications performed by means of electronic devices such as cellular telephones, e-mail, and in general any kind of voice and data communications over a digital medium.

As is known, the increasingly widespread use of cellular telephones and of messaging by means of e-mail and similar methods has given rise to a confidentiality problem of electronic messages, which is often in conflict with the need to share electronic resources, i.e., cellular telephones or personal computers, among a number of users.

If a user wishes to send a message, for example an SMS or an MMS or another kind of message by means of a cellular telephone, and if such telephone enters the possession of another user, the other user is capable of reading without any difficulty the messages sent by the first user.

Likewise, for example in the case of e-mail sent over the Internet, if the mailbox is shared by a number of users and therefore the user cannot protect himself with his own access password, the messages sent, unless appropriately deleted from the message list, can be read easily by all users.

Lack of confidentiality of communications therefore causes users to be extremely reluctant to share the electronic devices mentioned above, i.e., cellular telephones and computers.

Cellular telephones and computers can be protected against unauthorized use by entering an appropriate code that does not allow access to functions or programs to anyone who does not have such code.

However, in the case of devices designed to be shared by a number of users, said code is obviously known to those users and therefore confidentiality of the communications made by each user cannot be ensured in any way.

The aim of the present invention is to provide a method for protecting confidentiality of communications made over electronic devices that allows each user to share an electronic device, such as a cellular telephone or computer, with other users nevertheless ensuring confidentiality for each user.

Within this aim, an object of the present invention is to provide a method for protecting confidentiality of communications made over electronic devices that allows each user to send communications freely, without having to worry that others might at a later time read confidential communications.

Another object of the present invention is to provide a method for protecting confidentiality of communications made over electronic devices that allows each user to use the electronic device as if it were strictly personal.

Another object of the present invention is to provide a method for protecting confidentiality of communications made over electronic devices that is highly reliable, relatively simple to provide, and at competitive costs.

This aim and these and other objects that will become better apparent hereinafter are achieved by a method for protecting confidentiality of communications made over electronic devices, characterized in that it comprises the steps of:
defining, for at least one user of a terminal device, a private user profile that can be accessed exclusively by said user;
recognizing an incoming or outgoing communication identifier and verifying its association with a private user profile;
if an association exists, filtering the incoming or outgoing communication so as to make it invisible to other users that are different from the user with whose private profile the incoming or outgoing communication is associated.

Further characteristics and advantages of the invention will become better apparent from the description of a preferred but not exclusive embodiment of the method according to the present invention, illustrated by way of non-limiting example in the accompanying drawings, wherein:
Figure 1 is a flowchart of a first part of the method according to the present invention;
Figure 2 is a flowchart of a second part of the method according to the present invention;
Figure 3 is a flowchart of a third part of the method according to the present invention; and
Figure 4 is a flowchart of a fourth part of the method according to the present invention.

With reference to the figures, the method according to the present invention is based on the inherent capability of a receiving device, such as a cellular telephone or the like, to identify the sender of the incoming calls or messages by means of the calling number identification function. In the case of an e-mail management program, this capability can be assigned to the e-mail address of the sender.

Each user of a cellular telephone or computer must be able to personalize and protect access to a private area of his own and to his own configurations by means of a personal activation code. Said private area and the corresponding customizations are referenced hereinafter as a user profile.

Activation of the profile must occur by entering a sequence of digits or characters or an alphanumeric sequence that allows the user to access his own area without said area being sharable by other users.

The method must provide a filtering function, which must apply to the information of the directory, to the messages sent and received , to the automatic functions for diverting communication requests, as regards a cellular telephone, and to corresponding functions as regards an e-mail management program.

Identifiers that are classified as private must not be displayed in the available public lists.

Each name entered in the telephone or e-mail directory can be associated with a profile that has a private attribute. Accordingly, this association allows the directory to perform dynamic filtering, depending on the active profile, showing only the names with a private attribute that are associated with the current active profile or the names without a private attribute, which can accordingly be shared by all the users of the device or program.

The current profile can be deactivated either by selecting a different profile or by activating a public profile, i.e., a profile that allows to access data shared by all users.

Deactivation of a profile may also be automated without an event such as expiry at a preset time and/or activation of a lock of the terminal.

Each profile must be able to ensure a certain degree of customization of the filtering functions that the user wishes to activate on the names bearing a private attribute, such as for example only redirection of incoming voice communications as an alternative to masking of messages or of the directory. Customization of the masking services allows to determine the degree of confidentiality that one wishes to achieve in using the terminal.

In order to be able to manage correctly the transition among different profiles, when said profiles are created, virtual spaces are created for archiving the sent and transmitted messages that arrive from or are directed to users with a private attribute of the profile, and likewise for logging the received, requested and lost connections.

When a profile is activated, the terminal must warn the user of the "masked" activity (received messages and refused or transferred connections) during the period when the profile has been inactive, as a consequence of use on the part of another user.

The filtering functions associated with the activation of a profile allow different users to use the cellular telephone or electronic computer, thus protecting confidentiality of each user and of the corresponding contacts.

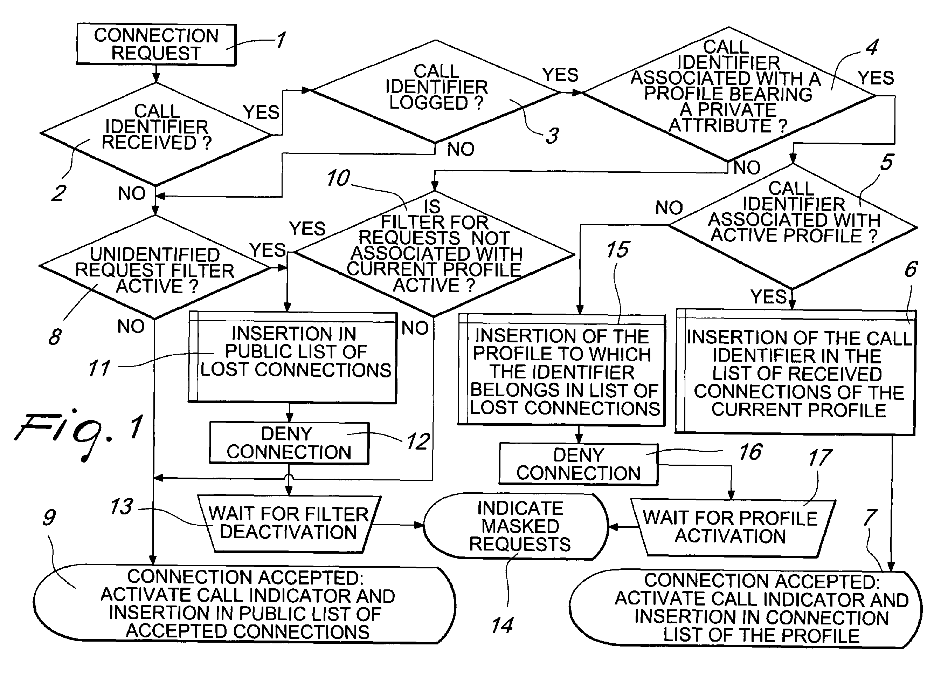

With reference to Figure 1, a flowchart of the process for masking the connection request is described.

First of all, step 1, a connection request is made and then, step 2, reception of a call identifier is checked. If the response is positive, a step 3 follows which checks whether the call identifier is registered or not.

If the response is affirmative, step 4 checks whether the call identifier is associated with a profile that has a private attribute. If the response is again affirmative, a step 5 follows which checks whether the call identifier is associated with the profile that is activated at that time. If the response is affirmative, a step 6 follows in which the call identifier is placed in the list of the current profile that is related to received connections, and the connection is accepted in step 7. In this case, the warning of the call and of the placement in the list of connections related to the current profile is activated.

If the answer is negative at step 2, step 2 is followed by a step 8, which checks whether the unidentified request filtering function is active or not. If it is not, a step 9 follows in which the connection is accepted and the warning of the call and of the placement in the public list of accepted connections is activated. In this case, the accepted connection is visible to all the users of that given terminal device.

If the answer is negative at step 4, step 4 is followed by a step 10 for checking whether the filter of requests that are not associated with the current profile is active or not.

If the answer is negative, this is followed by step 9.

If the response is negative in step 3, said step is followed by step 8.

If instead the response is affirmative in step 10, this is followed by a step 11, which is also accessed in case of affirmative response to step 8; said step 11 provides for insertion in a public list of lost connections.

Step 11 is followed by a step 12 for refusing connection and then by a step 13 for waiting for deactivation of the filter and by a step 14 for indicating masked requests.

In case of negative response to step 5, a step 15 follows for inserting the profile to which the identifier belongs in the list of lost connections.

This is followed by the connection denial step 16 and by a step 17 for waiting to activate the profile and then by the step 14.

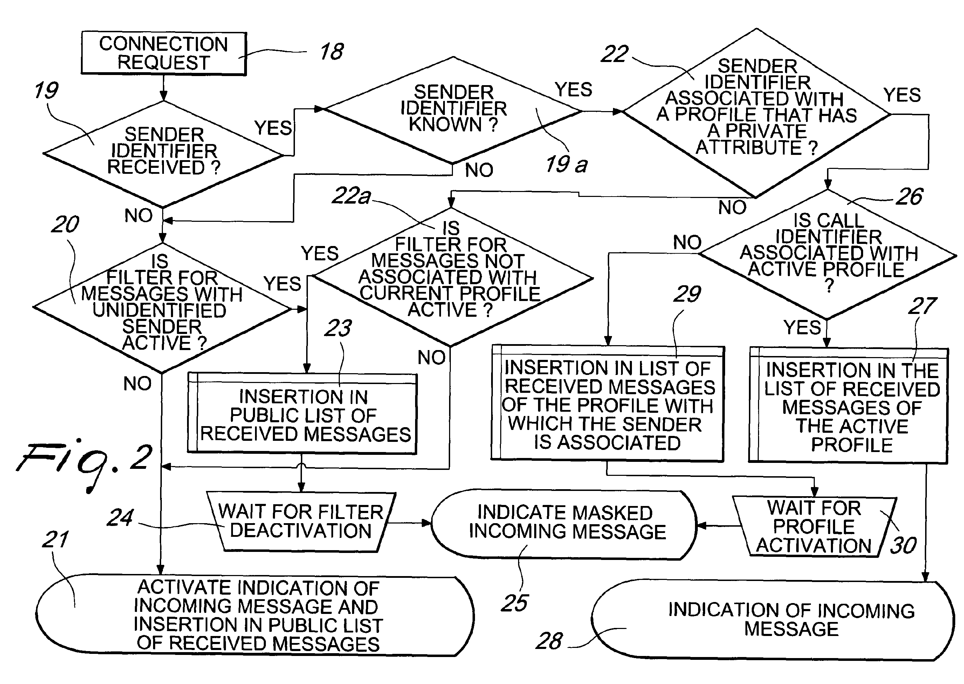

With reference now to Figure 2, a flowchart of the method for masking received voice or data messages is shown.

In this flowchart, the numeral 18 designates a step for requesting a connection, which is followed by a step 19 for verifying whether the sender identification is received or not.

In case of a negative reply, this is followed by a step 20, which checks whether the filter for the messages associated with an unidentified sender is active or not. If the answer is again negative, this is followed by a step 21 for activating the indication of an incoming message and of insertion in the public list of received massages. In this way, the incoming message is visible to all the users of the terminal device.

Step 19, if it yields a positive response, is followed by a step 19a, which checks whether the identification of the sender is known or not. In case of a negative response, step 20 again follows, and in case of an affirmative reply, step 22 follows to check whether the identification of the sender is associated with an attribute that is indicated as private.

If the response is negative, this is followed by a step 22a, which checks whether the filter of the messages not associated with the current profile is active or not.

If the response is negative, this is followed by step 21, whereas if the response is affirmative it is followed by a step 23, which follows also in case of an affirmative reply to the step 20, in which an insertion into the public list of received messages is made. Step 23 is followed by a step 24 for waiting to deactivate the filter, which is finally followed by a step 25 for indicating a masked incoming message.

Step 22, in case of an affirmative reply, is followed by a step 26 for verifying whether the call identification is associated with the active profile.

If it is, this is followed by a step 27, which performs insertion in the list of received messages related to the active profile, and by a step 28 for indicating the incoming message. If instead the response to step 26 is negative, i.e., when the incoming call is not associated with the profile that is currently active, this is followed by a step 29, which performs insertion in the list of received messages of the profile with which the sender is associated, and by a step 30 for waiting to activate the profile, which is then followed by the step 25.

Substantially, both for the connection request and for the method for masking received messages, if the output or input call or message is not associated with a currently active user profile, the call or message is kept in a sort of standby while waiting to activate the profile.

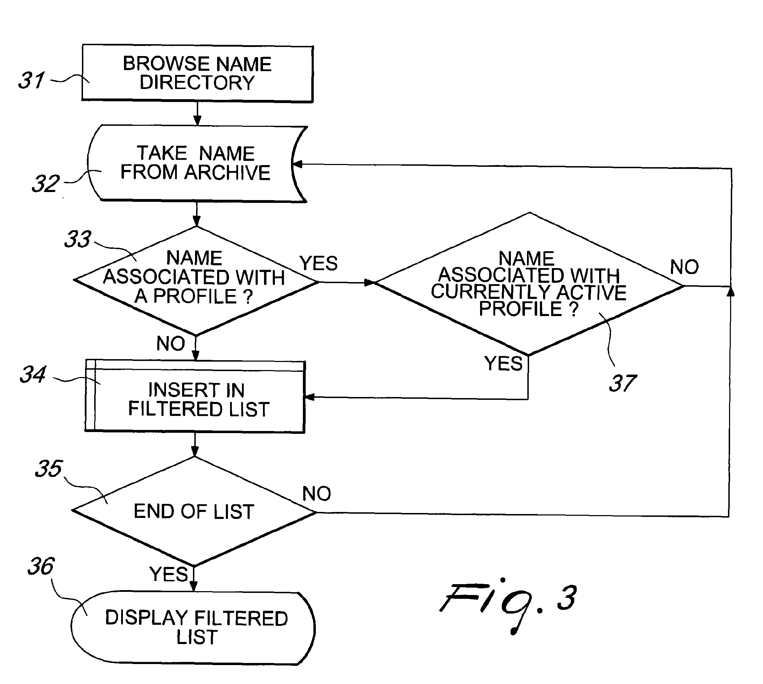

Figure 3 is a flowchart of the browsing of the directory of the registered names.

In said flowchart, step 31 is a step for browsing the list of names, followed by a step 32 for extracting the name from the archive. This is followed by a step 33 for verifying whether the extracted name is associated with a profile or not. If the response is negative, this is followed by a step 34, in which the name is entered in a filtered list and then by a step 35, which checks whether this is the end of the list or not. If the response is affirmative, a step 36 follows which shows the filtered list.

If the response is instead negative, one returns to step 32 from step 35. From step 33, in case of an affirmative response, one passes to a step 37 for verifying whether the name is associated with the profile that is currently active, and if the response is affirmative, one enters the step 34, whereas in case of a negative response one passes to step 32.

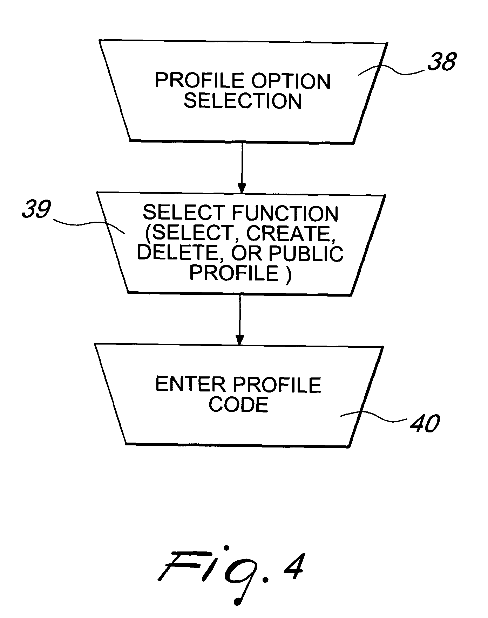

Finally, Figure 4 illustrates the management of the profiles with a step 38 for selecting the profiles option, which is followed by a step 35 for selecting a function, such as for example selecting, creating, deleting a public profile, and then by a step 40 in which the code of the profile is entered in order to activate said profile.

Substantially, the method described above allows a number of users to share the same terminal device, ensuring confidentiality and a given data area that can be used exclusively by a single user and cannot be shared by all the other users. This allows to maintain confidentiality of incoming and outgoing voice and data communications.

The method thus conceived is susceptible of numerous modifications and variations, all of which are within the scope of the appended claims; all the details may further be replaced with other technically equivalent elements.

The disclosures in Italian Patent Application no. MI2003A002545 from which this application claims priority, are incorporated herein by reference.

## Claims

1. A method for protecting confidentiality of communications made over electronic devices, **characterized in that** it comprises the steps of:
defining, for at least one user of a terminal device, a private user profile that can be accessed exclusively by said user;
recognizing an incoming or outgoing communication identifier and verifying its association with a private user profile;
if an association exists, filtering the incoming or outgoing communication so as to make it invisible to other users that are different from the user with whose private profile the incoming or outgoing communication is associated.

2. The method according to claim 1, **characterized in that** it comprises the step of activating a given user profile by entering a code.

3. The method according to claim 1, **characterized in that** it comprises the step of checking whether an incoming or outgoing communication identifier is associated with a given user profile or not and, if the association check is positive, checking whether the specific profile is active or not.

4. The method according to claim 3, **characterized in that** it comprises the step of waiting for the activation of a profile if the given profile associated with the incoming or outgoing communication is not activated.

5. The method according to one or more of the preceding claims, **characterized in that** it comprises the step of inserting the incoming or outgoing communication in a list of lost communications related to the user profile to which said identifier belongs.

6. The method according to one or more of the preceding claims, **characterized in that** it comprises the step of, if an incoming or outgoing communication identifier fails to be received, and if the filtering of unidentified communications is not active, accepting said communication and entering it in a public list that is visible to all the users of said terminal.

7. The method according to one or more of the preceding claims, **characterized in that** it comprises a step of browsing through a directory of registered user names in order to check whether they belong or not to a profile.
